(19) Europäisches Patentamt
European Patent Office
Office européen des brevets

(11) **EP 2 678 563 B1**

(12) **EUROPÄISCHE PATENTSCHRIFT**

(45) Veröffentlichungstag und Bekanntmachung des Hinweises auf die Patenterteilung:
**21.06.2017   Patentblatt 2017/25**

(21) Anmeldenummer: **12702423.0**

(22) Anmeldetag: **24.01.2012**

(51) Int Cl.:
*F04B 51/00* (2006.01)          *F04D 15/00* (2006.01)
*F24D 19/10* (2006.01)          *F24D 3/02* (2006.01)

(86) Internationale Anmeldenummer:
**PCT/EP2012/000302**

(87) Internationale Veröffentlichungsnummer:
**WO 2012/113497 (30.08.2012 Gazette 2012/35)**

(54) **LEISTUNGSOPTIMIERTES BETREIBEN EINER ELEKTROMOTORISCH ANGETRIEBENEN PUMPE DURCH MITKOPPLUNG**

PERFORMANCE ENHANCED OPERATION OF A PUMP DRIVEN BY AN ELECTRIC MOTOR USING POSITIVE-FEEDBACK

OPÉRATION À PERFORMANCE AMÉLIORÉE D'UNE POMPE ENTRAINÉE PAR UN MOTEUR ÉLECTRIQUE PAR RÉTROACTION POSITIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2011   DE 102011012211**

(43) Veröffentlichungstag der Anmeldung:
**01.01.2014   Patentblatt 2014/01**

(73) Patentinhaber: **WILO SE**
**44263 Dortmund (DE)**

(72) Erfinder:
• **ALBERS, Frank**
**58239 Schwerte (DE)**
• **GROSSE WESTHOFF, Edgar**
**59269 Beckum (DE)**

(74) Vertreter: **Cohausz Hannig Borkowski Wißgott Patent- und Rechtsanwaltskanzlei Schumannstrasse 97-99 40237 Düsseldorf (DE)**

(56) Entgegenhaltungen:
EP-A1- 0 726 396          EP-A2- 0 150 068
EP-A2- 0 730 213          DE-A1- 3 225 141
DE-A1- 19 525 887        US-A- 5 577 890

**Beschreibung**

Die Erfindung betrifft ein Verfahren zum leistungsoptimierten Betreiben einer elektromotorisch angetriebenen Pumpe in einem hydraulischen System mit wenigstens einem selbstgeregelten Verbraucher, wobei die Sollförderhöhe der Pumpe in Abhängigkeit ihres Volumens entlang einer einstellbaren, unterlagerten Kennlinie geregelt wird, die mittels eines vorgebbaren Kennliniensollwerts bestimmt ist. Des Weiteren betrifft die Erfindung eine elektromotorisch angetriebene Pumpe mit einer Steuer- und Regelelektronik, die dazu eingerichtet ist, das erfindungsgemäße Verfahren auszuführen. Ferner betrifft die Erfindung ein Computerprogrammprodukt mit Instruktionen zur Durchführung des erfindungsgemäßen Verfahrens, wenn es in einer Steuer- und Regelelektronik der Pumpe ausgeführt wird.

Bei der Regelung von Umwälzpumpen für Heizungsanlagen ist es Stand der Technik, eine Regelung entlang einer vorgegebenen Kennlinie, beispielsweise einer so genannten $\Delta$p-v Kennlinie vorzunehmen. Eine derartige $\Delta$p-v Kennlinie beschreibt einen linearen Zusammenhang zwischen dem von der Pumpe geförderten Volumenstrom Q und dem von ihr erzeugten Differenzdruck $\Delta$p, respektive ihrer Förderhöhe H. Eine Regelung gemäß dieser Kennlinie passt die hydraulische Leistung der Pumpe in Abhängigkeit des Volumenstroms an. Nachteilig ist bei einer derartigen Lösung, dass die Kennlinie starr ist, d.h. nur geringfügig geändert werden kann. Zwar ist es bekannt, Pumpen mit einer manuellen Einstellbarkeit der Kennlinie auszuführen, bei der die Lage und/oder Steilheit einer Kennlinie im Pumpenkennfeld im Allgemeinen diskret ausgewählt bzw. verändert werden kann. Eine darüber hinausgehende Korrektur der Pumpenleistung findet jedoch nicht statt.

Im Übrigen entspricht auch bei einer optimalen Auslegung und beliebig gewählter Form der Kennlinie die von der Pumpe erbrachte hydraulische Leistung bei einer Regelung entlang einer derartigen starren Kennlinie nicht in jedem Betriebspunkt dem Bedarf der Anlage, da die erforderliche Förderhöhe nicht nur vom Volumenstrom abhängt, sondern auch von der Lage der Verbraucher im hydraulischen Netz, die diesen Volumenstrom anfordern. Aus diesem Grund wird die Pumpenauslegung stets entweder zu hoch sein, weil sie nach dem schwächsten Glied unter "worst-case" Bedingungen ausgewählt ist, oder zu gering gewählt sein, so dass es zu einer Unterversorgung einzelner Verbraucher im hydraulischen System kommen kann. Ein Verfahren zum Betreiben einer elektromotorisch angetriebenen Pumpe gemäß dem Oberbegriff von Anspruch 1 ist z.B. aus der Offenlegungsschrift DE 32 25 141 A1 bekannt. Es ist daher Aufgabe der vorliegenden Erfindung ein Verfahren bereitzustellen, das eine optimale Anpassung der hydraulischen Leistung der Pumpe an ihren jeweiligen Betriebspunkt im hydraulischen System gewährleistet.

Diese Aufgabe wird durch ein Verfahren mit den Merkmalen des Anspruchs 1 gelöst. Vorteilhafte Weiterbildungen des Verfahrens sind in den Unteransprüchen angegeben.

Erfindungsgemäß wird ein Verfahren zum leistungsoptimierten Betreiben einer elektromotorisch angetriebenen Pumpe in einem hydraulischen System mit wenigstens einem selbstgeregelten Verbraucher vorgeschlagen, bei dem die Sollförderhöhe der Pumpe in Abhängigkeit ihres Volumenstroms entlang einer einstellbaren, unterlagerten Kennlinie geregelt wird, die mittels eines vorgebbaren Kennliniensollwert bestimmt ist, wobei der von der Pumpe geförderte Volumenstrom bestimmt und dessen Trend ermittelt wird und in Abhängigkeit des Volumenstroms und/oder dessen Trends der Kennliniensollwert erhöht wird, wenn der Volumenstrom steigt, oder reduziert wird, wenn der Volumenstrom sinkt.

Die Grundidee der vorliegenden Erfindung liegt darin, eine durch das hydraulische System vorgegebene Volumenstromänderung zusätzlich zu einer gewöhnlichen $\Delta$p-v Kennlinienregelung durch eine Anpassung der Kennlinie, und damit der Pumpenleistung zu unterstützen. Verringert sich der Volumenstrom im hydraulischen System, so wird diese Änderung nicht nur durch eine Reduktion der Pumpenleistung aufgrund einer Kennlinienregelung unterstützt, sondern zusätzlich durch eine Reduzierung des Kennliniensollwerts. Erhöht sich der Volumenstrom, so wird eine Erhöhung der Pumpenleistung durchgeführt. Regelungstechnisch wird diese grundlegende Vorgehensweise als Mitkopplung bezeichnet.

Die Änderung des Volumenstroms im hydraulischen System ist durch die selbstgeregelten Verbraucher bedingt. Ein selbstgeregelter Verbraucher im Sinne der vorliegenden Erfindung ist ein solcher Verbraucher, dessen Eigenvolumenstrom durch ein Stellglied, beispielsweise ein Thermostatventil am Verbraucher, unmittelbar geregelt wird. Umfasst das hydraulische System eine Mehrzahl derartiger selbstgeregelter Verbraucher, nehmen diese allesamt jeweils Einfluss auf den benötigten Gesamtvolumenstrom, der von der Pumpe gefördert werden muss. Wird dieser Volumenstrom nicht erreicht, entsteht eine Unterversorgung wenigstens eines Verbrauchers, wohingegen bei einem Überschreiten dieses benötigten Volumenstroms eine Überversorgung stattfindet, bei der unnötig Energie für die Pumpe verbraucht wird, da die Pumpe in diesem Fall gegen teilweise geschlossene Ventile arbeitet.

Durch das erfindungsgemäße Verfahren werden die genannten Betriebsfälle dadurch vermieden, dass die hydraulische Pumpenleistung allmählich verändert wird. Von einer klassischen Regelung entlang einer starren Kennlinie wird abgewichen. Vielmehr wird kontinuierlich der die Kennlinie bestimmende Kennliniensollwert verändert, um die hydraulische Pumpenleistung an den aktuellen Betriebspunkt anzunähern.

Der Kennliniensollwert $H_K$ einer Kennlinie ist dabei ein solcher Wert, der die Lage der Kennlinie im Kennfeld der Pumpe, d.h. im so genannten H/Q-Diagramm, bei bekannter oder zuvor festgelegter Steigung angibt. Im Falle einer $\Delta$p-konstant Kennlinie mit Steigung null, d.h. einer solchen Kennlinie, entlang der die Förderhöhe $H_{Soll}$ der Pumpe über den Volumenstrom Q konstant gehalten wird, gibt der Kennliniensollwert $H_K$ diese konstant zu haltende Förderhöhe $H_{Soll}$ der Pumpe an. Wird alternativ eine $\Delta p$-variabel Kennlinie verwendet, d.h. eine solche Kennlinie, die eine lineare Abhängigkeit der Förderhöhe $H_{soll}$ über den Volumenstrom Q beschreibt, kann diese Kennlinie beispielsweise durch ihren Schnittpunkt mit der Maximaldrehzahlkurve definiert werden, der bei einer bestimmten Förderhöhe erreicht ist, die dann dem Kennliniensollwert $H_K$ entspricht. Die Steigung der Kurve kann z.B. dadurch festgelegt sein, dass bei einem Volumenstrom null eine Förderhöhe vorliegt, die dem halben Kennliniensollwert entspricht.

Die Erhöhung oder Reduzierung des Kennliniensollwerts kann dadurch erfolgen, dass einem zuvor vorgegebenen Kennliniensollwert $H_{K,alt}$ ein Mitkopplungswert M addiert wird, wobei der Mitkopplungswert M positiv ist, wenn der Volumenstrom Q steigt, und negativ ist, wenn der Volumenstrom Q sinkt. Dies bedeutet, dass der Kennliniensollwert $H_K$ bei einem positiven Trend $\delta Q$ erhöht wird und bei einem negativen Trend $\delta Q$ reduziert wird. Ein Volumenstromtrend $\delta Q$ wird folglich durch das erfindungsgemäße Verfahren unterstützt, indem die Regelungswirkung einer bloßen Regelung entlang einer Kennlinie, insbesondere einer $\Delta p$-v Kennlinie, verstärkt wird. Der zuvor vorgegebene Kennliniensollwert $H_{K,alt}$ kann ein manuell vorgegebener Referenzsollwert $H_{K,ref}$ sein, der bei Inbetriebnahme der Pumpe maßgeblich ist, oder er kann der letzte von der Regelung vorgegebene Sollwert $H_K$ sein. Dies bedeutet, dass der zuvor vorgegebenen Kennliniensollwert $H_{K,alt}$ im Rahmen der Regelung der zuletzt vorgegebenen Kennliniensollwert $H_K$ ist.

Die vorliegende Erfindung stellt damit bei dieser Art der Mitkopplung eine Erweiterung der herkömmlichen $\Delta p$-v Kennlinienregelung dar. Abweichend von dieser Regelung führt die erfindungsgemäße Anpassung der Pumpenleistung jedoch nicht zu einer Regelung entlang einer starren Kennlinie, sondern zu einer dem Bedarf angepassten Betriebsweise. Weder liegt der tatsächliche Betriebspunkt der Pumpe auf einer zuvor manuell oder werksseitig eingestellten Referenzkennlinie, noch wandert er entlang einer solchen. Er bewegt sich vielmehr entlang einer beliebigen Trajektorie um diese eingestellte Referenzkennlinie. Es sei darauf hingewiesen, dass im Rahmen der Erfindung nicht zwingend eine $\Delta p$-v Kennlinienregelung unterlagert sein muss. Vielmehr kann die Kennlinie eine beliebige Form aufweisen, insbesondere auch konstant sein.

Der Volumenstrom Q kann beispielsweise mittels eines Volumenstromsensors gemessen werden. Vorzugsweise kann er aus internen elektrischen Größen der Pumpe respektive ihres Elektromotors bestimmt werden. Die Volumenstrombestimmung kann kontinuierlich oder zeitdiskret erfolgen. Entsprechend kann auch die Ermittlung des Volumenstromtrends $\delta Q$ kontinuierlich oder zeitdiskret durchgeführt werden. Im Sinne der vorliegenden Erfindung wird als Trend $\delta Q$ die zeitliche Änderung des Volumenstroms Q verstanden. Diese kann in besonders einfacher Weise aus der Ableitung dQ/dt des zeitlichen Verlaufs des Volumenstroms Q(t) berechnet werden, sofern der Volumenstrom Q(t) kontinuierlich erfasst wird. Bei zeitdiskreter Messung des Volumenstroms $Q(t_v)$ kann anstelle der Ableitung der Differenzenquotient $\Delta Q/\Delta T$ zur Bestimmung der zeitlichen Änderung des Volumenstroms Q verwendet werden. Da die Ableitung bzw. der Differenzenquotient der Volumenstrommesswerte zu starkem Rauschen führt, ist es besonders vorteilhaft, als Maß für die Volumenstromänderung die Differenz des aktuellen Volumenstroms Q und seines arithmetischen Mittels ($\overline{Q}$) über ein gerade vergangenes Zeitintervall T zu verwenden. Das Zeitintervall T kann beispielsweise zwischen 5 und 20 Minuten, vorzugsweise etwa 10 Minuten betragen. Es wandert mit fortschreitender Zeit mit, so dass das arithmetische Mittel als gleitender Mittelwert betrachtet werden kann.

Des Weiteren ist es von Vorteil, den bestimmten Volumenstrom Q mit Null zu multiplizieren, wenn er betragsmäßig kleiner als ein vorgegebener Minimalwert $Q_{min}$ ist. In gleicher Weise ist es von Vorteil, den ermittelten Trend $\delta Q$ mit Null zu multiplizieren, wenn dieser betragsmäßig kleiner als ein vorgegebener Minimalwert $\delta Q_{min}$ ist. Dies bewirkt eine Unterdrückung geringer Volumenstromwerte bzw. Volumenstromänderungen. Auf diese Weise können kleine Volumenstromschwankungen bzw. Trendschwankungen um den Nullpunkt herausgefiltert werden. Die Filterung kann durch Multiplikation des Volumenstroms bzw. des Trends mit einer Fensterfunktion erfolgen, deren Werte im Intervall zwischen dem jeweiligen Minimalwert $Q_{min}$ und $\delta Q_{min}$ und seines negativen Pendants $-Q_{min}$ und $-\delta Q_{min}$ null ist, und außerhalb eins. Dies kann im Rahmen einer Vorfilterung des gemessenen Volumenstroms bzw. des ermittelten Trends erfolgen. Als Minimalwert $Q_{min}$ für den Volumenstrom Q kann beispielsweise ein Wert zwischen 0,005 und 0,02 m$^3$/h, vorzugsweise ca. 0,01 m$^3$/h verwendet werden. Ferner kann als Minimalwert $\delta Q_{min}$ für den Trend $\delta Q$ beispielsweise ein Wert zwischen 5 bis 10 m$^3$/h in 10 Minuten verwendet werden.

Die Bestimmung des Mitkopplungswerts M kann auf unterschiedliche Weise erfolgen. Er kann beispielsweise aus einer vom Volumenstrom Q und/oder von dessen Trend $\delta Q$ abhängigen Funktion f(Q), f($\delta Q$) oder f(Q, $\delta Q$) berechnet werden. Vorzugsweise erfolgt die Berechnung anhand einer vom Trend $\delta Q$ abhängigen Funktion f($\delta Q$) oder anhand einer vom Volumenstrom Q und vom Trend $\delta Q$ abhängigen Funktion f(Q, $\delta Q$).

Eine besonders einfache Form der Mitkopplung ist eine zum Trend $\delta Q$ proportionale Mitkopplung gemäß der Funktion M($\delta Q$)=k·$\delta Q$, wobei k eine positive Konstante ist, mit der die Volumenstromänderung $\delta Q$ skaliert und bezüglich der physikalischen Einheit angepasst wird. Alternativ kann der Mitkopplungswert M anhand der Funktion M($\delta Q$)=k·($\delta Q$)$^3$ ermittelt werden. Eine derartige Funktion definiert einen kubischen Funktionszusammenhang zwischen dem Trend $\delta Q$ und der Mitkopplung M. In einer weiteren alternativen Ausführungsform kann der Mitkopplungswert M gemäß der Funktion M($\delta Q$) = k·arctan($\delta Q$) berechnet werden. Auch bei den beiden letztgenannten Varianten ist k eine positive Konstante, mit der die Volumenstromänderung $\delta Q$ skaliert und bezüglich der physikalischen Einheit angepasst wird. Die Arkustangens-Funktion hat den Vorteil, dass sie für positive und negative Trends $\delta Q$ asymptotisch gegen einen durch k bestimmten Grenzwert läuft, so dass eine betragliche Begrenzung des Mitkopplungswerts erreicht wird, die die Stabilität der Regelung verbessert.

Die genannten Funktionen haben die Eigenschaft, dass sie symmetrisch sind, insbesondere eine Punktsymmetrie zum Nullpunkt besitzen, so dass für positive und negative Trends $\delta Q$ gleichen Betrags jeweils betraglich der gleiche Mitkopplungswert M zugeordnet wird.

Gemäß einer weiteren alternativen Berechnungsformel für den Mitkopplungswert kann dieser aus einer asymmetrischen Funktion berechnet werden. Eine asymmetrische Funktion hat den Vorteil, dass für positive und negative Trends $\delta Q$ gleichen Betrags jeweils betraglich unterschiedliche Mitkopplungswerte M zugeordnet werden können. Auf diese Weise kann für positive und negative Volumenstromänderungen eine unterschiedlich starke Mitkopplung definiert werden. Dabei wird bevorzugt der Mitkopplungswert betragsmäßig für positive Trends $\delta Q$ größer als für negative Trends $\delta Q$ gewählt, damit auf Volumenstromzunahmen, d.h. auf einen erhöhten Volumenstrombedarf schnell reagiert wird.

Vorzugsweise erfolgt die Berechnung aus einer asymmetrischen Funktion, die die Überlagerung zweier gegeneinander verschobener, unterschiedlich gewichteter Arkustangens-Funktionen beschreibt. Dies kann beispielsweise gemäß der folgenden Mitkopplungsfunktion erfolgen:

$$M(\delta Q) = a_1 \cdot (\arctan([\delta Q - c_1]/b_1)/\pi + d_1) + a_2 \cdot (\arctan([\delta Q + c_2]/b_2)/\pi - d_2) - E,$$

wobei M der Mitkopplungswert, $\delta Q$ der Trend, $a_1$, $a_2$, $b_1$ und $b_2$ jeweils positive Skalierungsfaktoren, $c_1$, $c_2$, $d_1$ und $d_2$ jeweils positive Verschiebungsfaktoren und E ein Offset für eine Nullpunktskorrektur ist, und wobei $a_1$ ungleich $a_2$ ist. Der Offset E entspricht dem Wert der Summe der vorstehenden Arkustangens-Funktionen für einen Trend $\delta Q$ von Null. Die natürlichen Symmetriepunkte der Arkustangens-Funktionen sind aus dem Nullpunkt jeweils um einen Verschiebungsfaktor $c_1$, $c_2$ gegeneinander verschoben.

In einer besonders bevorzugten Ausführungsvariante des erfindungsgemäßen Verfahrens wird der Skalierungsfaktor $a_1$ der nach rechts verschobenen Arkustangens-Funktion größer als der Skalierungsfaktor $a_2$ der nach links verschobenen Arkustangens-Funktion gewählt. Dies bewirkt, dass eine größere Mitkopplung M für positive Trends $\delta Q$ und eine kleinere Mitkopplung M für negative Trends $\delta Q$ verwendet wird. Hierdurch wird eine schnellere Reaktion der Pumpenregelung bei einer Volumenstromzunahme im Vergleich zu einer Reaktion auf eine Volumenstromabnahme erreicht. Dies wiederum verhindert eine Unterversorgung von Verbrauchern, insbesondere beim Öffnen der ihren Volumenstrom jeweils regelnden Stellglieder.

Die vorgenannten beispielhaften Mitkopplungsfunktionen $M(\delta Q)$ haben die Wirkung, dass bei konstantem Volumenstrom Q, d.h. bei einem Trend $\delta Q$ von 0, ein Mitkopplungswert M von 0 vorliegt, d.h. dass die gemäß einer dieser Funktionen $M(\delta Q)$ berechnete Mitkopplung M bei konstantem Volumenstrom Q zur Beibehaltung der aktuellen Sollförderhöhe $H_K$ führt.

In Einzelfällen kann es in dem hydraulischen System jedoch zu nicht linearen Effekten kommen, die einen Strömungsstillstand zur Folge haben können, beispielsweise im Falle eines thermischen Umtriebs oder im Falle schließender Rückflussverhinderer in einem oder mehreren Teilen des hydraulischen Systems. Ein Strömungsstillstand kann auch dann auftreten, wenn ein Volumenstrombedarf einzelner Verbraucher besteht, die dann nicht mehr versorgt werden. Um einen Strömungsstillstand zu vermeiden und damit die Robustheit des erfindungsgemäßen Verfahrens gegenüber solchen nichtlinearen Effekten zu erhöhen, ist es von Vorteil, dem Mitkopplungswert M einen Offset $M_0$ hinzuzuaddieren, wenn der Trend $\delta Q$ positiv oder Null ist.

Bei den zuvor beispielhaft beschriebenen Mitkopplungsfunktionen $M(\delta Q)$ wird die Mitkopplung M ausschließlich in Abhängigkeit von der Änderung des Volumenstroms $\delta Q$ berechnet. Es zeigt sich jedoch, dass im Allgemeinen bei kleinem Volumenstrom Q die Mitkopplung M größer gewählt werden kann als bei großen Volumenströmen. Die Änderung des Volumenstroms $\delta Q$ bei Änderung der Sollförderhöhe $H_{soll}$ kann direkt anhand der Rohrnetzparabel $H = d \cdot Q^2$ berechnet werden, da sich der Volumenstrom zu $Q = \sqrt{(H/d)}$ berechnet. Da der Rohrnetzwiderstand d im Nenner dieses Ausdrucks steht, bewirkt bei steilen Anlagenkennlinien mit hohem Rohrnetzwiderstand d eine Änderung der Sollförderhöhe $H_{soll}$ eine geringere Änderung des Volumenstroms Q als bei "flachen" Anlagenkennlinien mit kleinerem Rohrnetzwiderstand d. Daher ist es zweckmäßig, die Mitkopplung M bei kleinem Volumenstrom Q größer zu wählen als bei großem Volumenstrom Q. Erfindungsgemäß kann daher für die Berechnung der Mittkopplung M zusätzlich der aktuelle Volumenstrom Q gemäß einer Funktion $M = f(Q, \delta Q)$ verwendet werden.

In einer einfachen Ausführungsform kann die zuvor in Abhängigkeit der Volumenstromänderung $\delta Q$ berechnete Mitkopplung M mit einer volumenstromabhängigen Skalierungsfunktion, beispielsweise $S(Q) = S_{max}/(1+Q/Q_0)$, multipliziert werden, so dass $M(Q, \delta Q) = S(Q) \cdot f(\delta Q)$ ist.

Eine weitere Maßnahme zur Erhöhung der Robustheit des erfindungsgemäßen Verfahrens kann durch eine Beschränkung des Mitkopplungswert M seiner betragsmäßigen Höhe nach erreicht werden. Hierdurch werden zu starke Kennlinienänderungen vermieden. Vorzugsweise wird dem Mitkopplungswert M ein Maximalwert M_max zugewiesen, wenn er einen oberen Grenzwert überschreitet. In entsprechender Weise kann dem Mitkopplungswert M ein Minimalwert M_min zugewiesen werden, wenn er einen unteren Grenzwert unterschreitet. Somit kann der aktuell berechnete Mitkopplungswert M mit einer oberen Grenze M_max sowie mit einer unteren Grenze M_min verglichen werden und bei Überschreiten der oberen Grenze M_max bzw. Unterschreiten der unteren Grenze M_min auf die obere Grenze M_max respektive die untere Grenze M_min gesetzt werden.

Alternativ kann die Mitkopplungswertbegrenzung auf einfache Weise durch die zuvor genannte Mitkopplungsfunktion erfolgen. Auf diese Weise erübrigen sich zusätzliche Vergleichs- und Zuordnungsschritte. Da die Arkustangens-Funktion für steigende Werte asymptotisch gegen den Wert $\pi/2$ und für fallende Werte gegen den Wert $-\pi/2$ konvergiert, kann durch eine geeignete Wahl der Konstanten k bzw. des Skalierungsfaktors $a_1$ für die nach rechts verschobene Arkustangens-Funktion eine obere Bereichsbegrenzung für den Mitkopplungswert M und durch geeignete Wahl des Skalierungsfaktors $a_2$ für die nach links verschobene Arkustangens-Funktion eine untere Bereichsbegrenzung für den Mitkopplungsfaktor M realisiert werden. Vorzugsweise wird bei der symmetrischen Arkustangens-Mitkopplungsfunktion $M(\delta Q)$ die Konstante k als $k = M\_max \cdot 2/\pi$ gewählt. Vorzugsweise wird die Begrenzung bei der unsymmetrischen Arkustangens-Mitkopplungsfunktion $M(\delta Q)$ dadurch erreicht, dass der Skalierungsfaktor $a_1$ als Maximalwert M_max und der Skalierungsfaktor $a_2$ als Minimalwert M_min gewählt werden.

Alternativ oder in Kombination mit der Mitkopplungswertbegrenzung kann die Robustheit des erfindungsgemäßen Verfahrens dadurch verbessert werden, dass die Erhöhung oder Reduzierung des Kennliniensollwerts $H_K$ nur innerhalb eines definierten Arbeitsbereichs erfolgt. Dieser Arbeitsbereich kann beispielsweise durch ein Band um eine eingestellte Referenzkennlinie K definiert sein, die werksseitig eingestellt wird oder manuell an der Pumpe einstellbar sein kann. Es sei darauf hingewiesen, dass im Sinne der vorliegenden Erfindung der Begriff "Arbeitsbereich" nicht den Arbeitsbereich der Pumpe beschreibt sondern vielmehr der Arbeitsbereich des erfindungsgemäßen Regelprinzips gemeint ist, der wie der Arbeitsbereich einer Pumpe anhand eines H/Q-Diagramms veranschaulicht werden kann.

Vorzugsweise wird ein derartiges Arbeitsband dadurch gebildet, dass der Kennliniensollwert $H_K$ auf einen Wert innerhalb eines Bereichs zwischen einem Maximalsollwert $H_{K,max}$ und einem Minimalsollwert $H_{K,min}$ beschränkt wird, wobei ein Referenzsollwert $H_{K\_ref}$ der eingestellten oder einstellbaren Referenzkennlinie K innerhalb dieses Bereichs liegt. Da die Änderung des Kennliniensollwerts $H_K$ für die unterlagerte Kennlinienregelung, ausgehend von einer initial eingestellten Referenzkennlinie K eine Verschiebung dieser Referenzkennlinie K bewirkt, ergibt sich ein Arbeitsband um diese Referenzkennlinie K, das nach oben durch diejenige Kennlinie begrenzt ist, die durch den Maximalsollwert $H_{K,max}$ bestimmt ist, und nach unten durch die Kennlinie begrenzt ist, die durch den Minimalsollwert $H_{K,min}$ bestimmt ist, wobei die Pumpe jeweils auf einer aktuellen Kennlinie innerhalb dieses Bandes geregelt wird.

Alternativ zu der Begrenzung des Arbeitsbereichs durch ein Band um eine eingestellte Referenzkennlinie K kann der Arbeitsbereich derart definiert sein, dass er unterhalb der eingestellten Referenzkennlinie K liegt. Dies hat den Vorteil, dass die für den Betrieb der Pumpe erforderliche Energie minimiert wird. Wie Erfahrungen mit der heute üblicherweise verwendeten $\Delta$p-v Kennlinie zeigen, tritt im Allgemeinen keine Unterversorgung des hydraulischen Systems auf, so dass auf einen Betrieb oberhalb der voreingestellten Referenzkennlinie K verzichtet werden kann. Vorzugsweise wird daher der Kennliniensollwert $H_K$ auf einen Wert innerhalb eines Bereichs zwischen einem Maximalsollwert $H_{K,max}$ und einem Minimalsollwert $H_{K,min}$ beschränkt, wobei der Maximalsollwert $H_{K,max}$ dem Referenzsollwert $H_{K\_ref}$ einer eingestellten oder einstellbaren Referenzkennlinie K entspricht.

In einem einfachen Fall ist die untere Grenze des Arbeitsbereichs durch eine Gerade gebildet. Beispielsweise kann diese Gerade einer durch eine Parallelverschiebung der Referenzkennlinie um einen bestimmten Wert nach unten entstehenden Gerade entsprechen. Wird die untere Grenze dagegen durch den minimalen Kennliniensollwert $H_{K,min}$ definiert, kann sich eine Gerade ergeben, die nicht nur nach unten verschoben ist, sondern deren Steigung auch größer wird. Dies wäre insbesondere dann der Fall, wenn der Kennliniensollwert $H_K$ die Kennlinie derart definiert, dass sie bei der Förderhöhe $H_K$ die Maximaldrehzahlkurve und bei $0{,}5*H_K$ die Förderhöhenachse schneidet. In einer bevorzugten Weiterbildung der Erfindung ist die untere Grenze des Arbeitsbereichs jedoch nicht durch eine starre oder von der Referenzkennlinie abhängige Gerade gebildet, sondern durch eine vom Volumenstrom Q abhängigen Funktion $H_{K,min} = f(Q)$ definiert.

Des Weiteren ist es von Vorteil, eine Beschränkung des Arbeitsbereichs zu großen Volumenströmen Q hin vorzunehmen. Erfindungsgemäß kann daher die Erhöhung oder Reduzierung des Kennliniensollwerts $H_K$ nur dann vorgenommen werden, wenn der Volumenstrom Q unterhalb eines vorgegebenen Volumenstromreferenzwerts Q_ref liegt. Vorzugsweise entspricht dieser Volumenstromreferenzwert Q_ref im Wesentlichen dem halben Maximalvolumenstrom Q_max, d.h. demjenigen Volumenstrom, der bei einem Betriebspunkt vorliegt, der in dem Schnittpunkt der voreingestellten Referenzkennlinie K mit der Maximaldrehzahlkurve liegt. Dies hat folgenden Hintergrund:

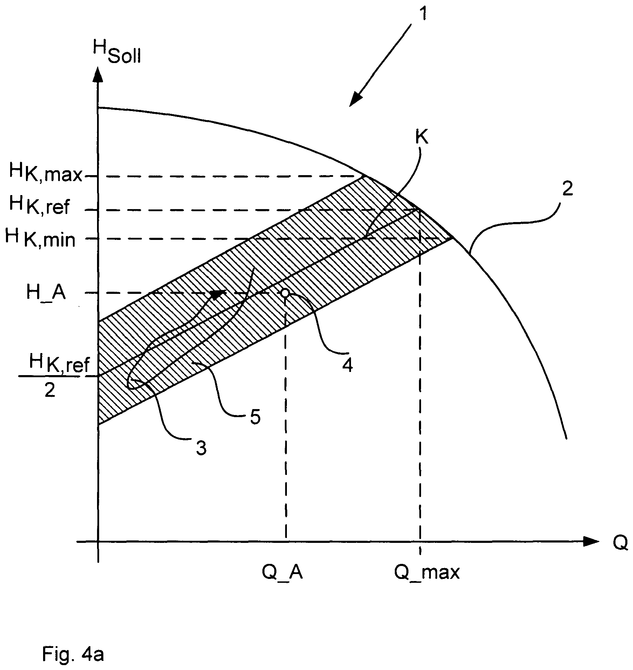

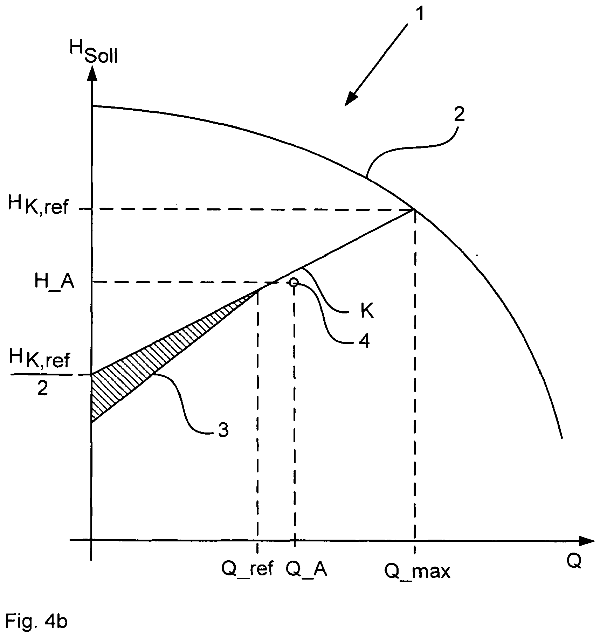

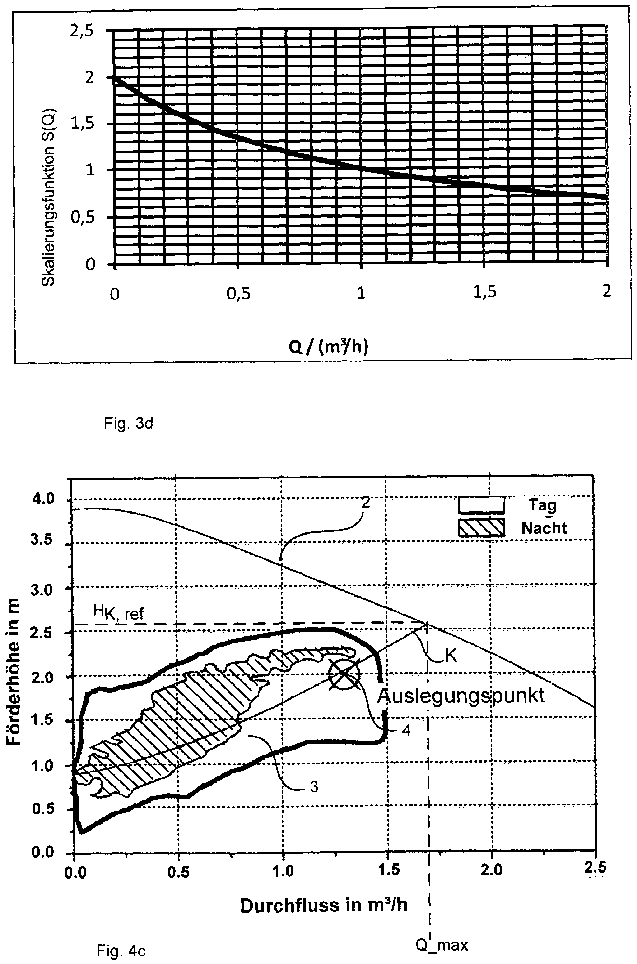

Im Rahmen der Auslegung einer hydraulischen Anlage berechnet der Installateur den so genannten Auslegungspunkt der Anlage, d.h. den Auslegungsvolumenstrom Q_A und die zugehörige Auslegungsförderhöhe H_A, siehe Figuren 4a, 4b, in denen der Auslegungspunkt mit der Bezugsziffer 4 versehen ist. Die zu verwendende Pumpe wird durch den Installateur derart ausgewählt, dass der Auslegungspunkt innerhalb des Kennfeldes der Pumpe liegt. Da keine beliebigen Pumpengrößen verfügbar sind, liegt der Auslegungspunkt in der Regel deutlich unterhalb der Maximaldrehzahlkurve 2 der Pumpe. Die manuelle Einstellung des Sollwerts einer $\Delta$p-v Regelkennlinie an dieser Pumpe erfolgt derart, dass die Regelkennlinie K möglichst durch den Auslegungspunkt verläuft, wobei aufgrund der diskretisierten Einstellbarkeit der Regelkennlinie typischerweise kleine Abweichungen vorliegen. Für den Betrieb der Pumpe nahe dem Auslegungspunkt kann daher davon ausgegangen werden, dass aufgrund der vom Installateur vorgenommenen Berechnung die Förderhöhe der voreingestellten Regelkennlinie dem Bedarf der Anlage im Wesentlichen entspricht. Aus diesem Grund ist es zweckmäßig, in der Nähe des Auslegungspunktes die Pumpe entlang der voreingestellten Regelkennlinie, d.h. der Referenzkennlinie zu betreiben, und eine Absenkung des Kennliniensollwerts unter diese Referenzkennlinie erst unterhalb des Volumenstromreferenzwerts Q_ref vorzunehmen, wobei der Volumenstromreferenzwert Q_ref bevorzugt etwas geringer oder gleich dem Volumenstrom Q_A im Auslegungspunkt des hydraulischen Systems ist.

In einer weiteren vorteilhaften Weiterbildung des erfindungsgemäßen Verfahrens wird eine allmähliche Rückführung des Betriebspunktes der Pumpe in den Arbeitsbereich durchgeführt, wenn sich dieser Betriebspunkt außerhalb des Arbeitsbereichs befindet. Erfindungsgemäß kann daher der Kennliniensollwert $H_K$ allmählich, stufenweise reduziert werden, wenn er den Maximalsollwert $H_{K,max}$ überschreitet, oder allmählich, stufenweise erhöht werden, wenn er den Minimalsollwert $H_{K,min}$ unterschreitet. Vorzugsweise kann im Falle eines Verlassens des Arbeitsbereichs die Mitkopplung deaktiviert sein bzw. werden. Allmählich bedeutet in diesem Zusammenhang, dass nur eine geringfügige Änderung des Kennliniensollwerts $H_K$ erfolgt. Wird beispielsweise der Arbeitsbereich ausgehend von einem Betriebspunkt bei einem kleinen Volumenstrom Q und geringer Förderhöhe H dadurch verlassen, dass zusätzliche Ventile öffnen, so dass sich der Betriebspunkt zu größeren Volumenströmen aus dem Arbeitsbereich bewegt, wird der Kennliniensollwert $H_K$ erfindungsgemäß nicht sprunghaft auf einen hohen Wert angehoben. Dies erfolgt vielmehr durch allmähliche Rückführung des Sollwerts in den Arbeitsbereich. Unangenehme Geräusche durch schnelle Drehzahländerungen im hydraulischen System werden hierdurch vermieden.

Ob der Betriebspunkt der Pumpe außerhalb des Arbeitsbereichs liegt, kann durch einen Vergleich mit den Bereich definierenden Maximal- und Minimalwerten erfolgen. Die Rückkehrgeschwindigkeit kann entweder durch die Schritthöhe und/ oder die Schrittweite, d.h. die zeitliche Dauer eines Schritts vorgegeben werden. Vorzugsweise beträgt ein stufenförmige Änderung des Kennliniensollwerts $H_K$ zwischen 1 cm und 3cm, vorzugsweise etwa 2cm, pro Minute. Im Falle einer zeitdiskreten Erfassung des Volumenstroms Q kann die Schrittweite dem Abtastintervall oder einem Vielfachen des Abtastintervalls entsprechen. So kann die Schrittweite beispielsweise 30 Sekunden, eine Minute betragen oder auch länger sein. Es kann jedoch auch eine beliebige andere Schrittweite verwendet werden.

Die Änderung des Kennliniensollwerts $H_K$ kann auf diese Weise für jedes weitere Zeitintervall, bzw. für jeden weiteren Zeitschritt erneut erfolgen, solange der aktuelle Betriebspunkt der Pumpe weiterhin außerhalb des Arbeitsbereichs liegt. Dies bedeutet, dass der Kennliniensollwert $H_K$ der Pumpe erneut geringfügig angepasst wird, wenn der Betriebspunkt im nächsten Zeitschritt weiterhin außerhalb des Arbeitsbereichs liegt. Erfindungsgemäß kann daher die stufenweise Änderung des Kennliniensollwerts $H_K$ so oft wiederholt werden, bis er wieder innerhalb des Bereichs zwischen dem Maximalsollwert $H_{K,max}$ und dem Minimalsollwert $H_{K,min}$ liegt. Der Vorteil dieser Vorgehensweise liegt in der kontinuierlichen Anpassung des Betriebspunktes der Pumpe, ohne dass ungewünschte, sprunghafte Änderungen des Systemzustands bewirkt werden, die zu Überschwingen und Strömungsgeräuschen führen können.

Das vorgeschlagene Verfahren kann besonders vorteilhaft zur Steuerung einer Umwälzpumpe, insbesondere einer Heizungsumwälzpumpe, in einem geschlossen hydraulischen System verwendet werden. In diesem Falle kann das hydraulische System eine Heizungsanlage mit zumindest einem Heizkörper sein, der von der Heizungsumwälzpumpe versorgt wird. Alternativ kann das hydraulische System ein Kühlsystem sein, das Kühlaggregate als Verbraucher mit einer Kühlflüssigkeit versorgt, die von einer Kühlflüssigkeitspumpe gefördert wird.

Vorzugsweise ist das vorgeschlagene Verfahren in einer Steuer- und Regelelektronik einer Pumpe, insbesondere einer derartigen Umwälzpumpe implementiert, so dass es in dieser Steuer- und Regelelektronik ausgeführt werden kann.

Gemäß dieser Verwendung ist das erfindungsgemäße Verfahren durch Programminstruktionen gebildet, die ein Computerprogrammprodukt bilden, welches zur Durchführung des Verfahrens entsprechend eingerichtet ist und auf einer Steuer-und Regelelektronik der Pumpe ausgeführt werden kann, um diese Pumpe zu betreiben. Daher betrifft die Erfindung auch ein Computerprogrammprodukt mit Instruktionen zur Durchführung des Verfahrens zum Betreiben einer elektromotorisch betriebenen Pumpe, wenn es in einer Steuer- und Regelungselektronik dieser Pumpe ausgeführt wird.

Weitere Vorteile und Merkmale der Erfindung werden nachfolgend anhand von konkreten Ausführungsbeispielen und der beigefügten Figuren erläutert. Es zeigen:

Figur 1a:    schematische Darstellung des Regelungsverfahrens gemäß einer ersten Ausführungsvariante
Figur 1b:    schematische Darstellung des Regelungsverfahrens gemäß einer zweiten Ausführungsvariante
Figur 1c:    schematische Darstellung des Regelungsverfahrens gemäß einer dritten Ausführungsvariante mit Bereichsrückführung

Figur 1d:    schematische Darstellung der Bereichsrückführungseinheit

Figur 2a:    schematische Darstellung der Vorverarbeitung des Volumenstrommesssignals gemäß einer ersten Variante

Figur 2b:    schematische Darstellung der Vorverarbeitung des Volumenstrommesssignals gemäß einer zweiten Variante

Figur 3a:    Bestimmung des Mitkopplungswertes gemäß einer linearen Abhängigkeit zum Volumenstromtrend

Figur 3b:    Bestimmung des Mitkopplungswertes gemäß einer linearen Abhängigkeit zum Volumenstromtrend unter Berücksichtigung eines Offsets

Figur 3c:    Bestimmung des Mitkopplungswerts anhand einer unsymmetrischen Funktion

Figur 3d:    Darstellung einer Skalierungsfunktion S(Q)

Figur 4a:    H/Q-Diagramm mit bandförmigem Arbeitsbereich und Betriebspunktstrajektorie

Figur 4b:    H/Q-Diagramm mit begrenztem Arbeitsbereich

Figur 4c:    H/Q-Diagramm mit wolkenförmigem Arbeitsbereich

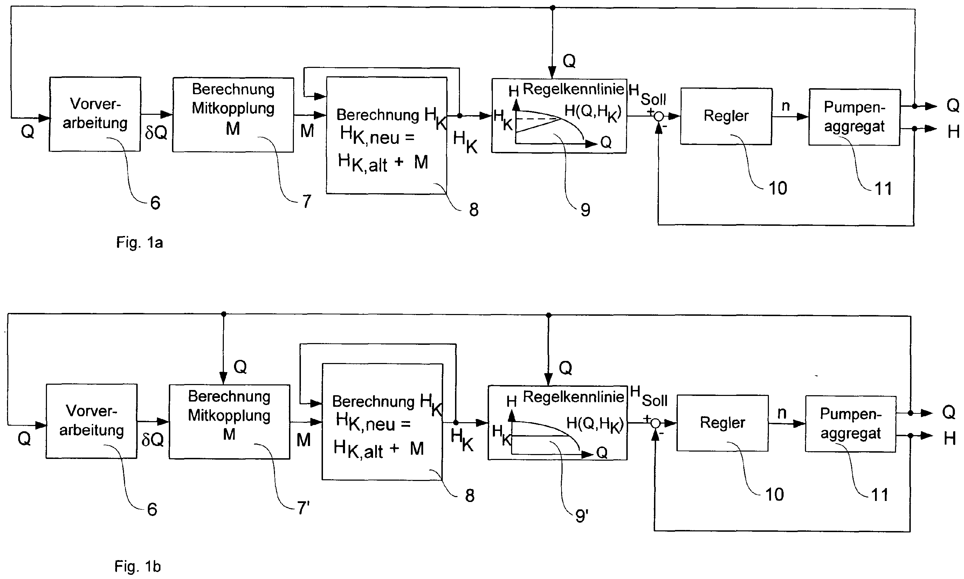

Figur 1a zeigt ein Regelungsschema, in dem das erfindungsgemäße Verfahren zum leistungsoptimierten Betreiben einer elektromotorisch angetriebenen Umwälzpumpe in einem Heizungssystem realisiert ist. Die Umwälzpumpe ist Bestandteil eines Pumpenaggregats 11, das ebendiese Pumpe und den sie antreibenden Elektromotor umfasst.

Der von dem Pumpenaggregat 11 geförderte Volumenstrom Q wird gemessen und einer Kennlinienregelung 9 zugeführt. Gemäß einer voreingestellten Regelkennlinie, die nach dem Beispiel in Figur 1a eine $\Delta p$-v Kennlinie ist, wird dem aktuellen Volumenstrom Q ein Förderhöhensollwert $H_{soll}$ für die Pumpe zugeordnet und ausgegeben. Dieser Förderhöhensollwert $H_{soll}$ stellt die Führungsgröße des nachgelagerten Regelkreises dar und wird dem Regler 10 zugeführt. Gleichzeitig wird zudem die Förderhöhe H gemessen und negativ auf den Reglereingang zurückgekoppelt, so dass am Eingang des Reglers 10 die Regelabweichung in Gestalt der Differenz aus Förderhöhensollwert $H_{soll}$ und aktueller Förderhöhe H anliegt.

Der Regler 10 ist als PID-Regler ausgeführt. Er gibt als Stellgröße eine Spannung aus, die zur einzustellenden Solldrehzahl n proportional ist. Diese Stellgröße n wird dem Pumpenaggregat 11 bzw. dem die Pumpe antreibenden Elektromotor vorgegeben. In Abhängigkeit der Drehzahl n des Pumpenaggregates 11 wird dessen Differenzdruck $\Delta p$ bzw. dessen Förderhöhe H eingestellt. Ferner stellt sich durch die Drehzahl des Pumpenaggregats 11 auch der Volumenstrom Q ein, wobei der Volumenstrom Q aber abhängig vom hydraulischen Widerstand des Heizungssystems, d. h. von dem Öffnungsgrad der Stellventile der Verbraucher ist. Diese beschriebene Kennlinienregelung entspricht dem Stand der Technik.

Erweitert wird diese Kennlinienregelung erfindungsgemäß dadurch, dass die voreingestellte Kennlinie in der Kennlinienregelung 9 im Betrieb des Pumpenaggregates 11 hinsichtlich ihrer Lage im H/Q-Diagramm kontinuierlich angepasst wird. Hierzu wird ausgehend vom gemessenen Volumenstrom Q dessen Trend $\delta Q$ ermittelt, und in Abhängigkeit des Trends $\delta Q$ der Kennliniensollwert $H_K$ der aktuellen Regelkennlinie erhöht, wenn der Volumenstrom Q steigt, oder reduziert wird, wenn der Volumenstrom Q sinkt. Werksseitig oder manuell ist an dem Pumpenaggregat eine Referenzkennlinie K mit einem Kennlinienreferenzsollwert $H_{K,ref}$ eingestellt, entlang derer bei der Inbetriebnahme des Pumpenaggregats 11 zunächst geregelt wird.

Der Trend $\delta Q$ wird in einer Vorverarbeitung 6 ermittelt. Anschließend wird in einer Berechnungseinheit 7 ein Mitkopplungswert M bestimmt, der in einer nachgelagerten Mitkopplungsstufe 8 dem aktuellen Kennliniensollwert $H_{K,alt}$ hinzuaddiert wird. Diese Summe bildet einen neuen Kennliniensollwert $H_K$ der der nachgeschalteten Kennlinienregelung 9 vorgegeben wird. Der Mitkopplungswert M ist positiv für positive Trends $\delta Q$, und negativ für negative Trends $\delta Q$. Die ursprünglich eingestellte Kennlinie wird dadurch im H/Q-Diagramm nach oben oder nach unten verschoben und bildet eine neue, temporär gültige Regelkennlinie, entlang derer das Pumpenaggregat 11 durch die Kennlinienregelung 9 geregelt wird. Dies erfolgt jedenfalls so lange, wie kein neuer Kennliniensollwert $H_K$ vorgegeben wird.

Figur 1b zeigt eine alternative Ausführungsvariante des Regelungsschemas, das sich gegenüber der ersten Ausführungsvariante in Figur 1a in der Berechnungseinheit 7' und der Kennlinienregelung 9' unterscheidet. Eingangsgröße zur Berechnung des Mitkopplungswerts M ist für die Berechnungseinheit 7' nicht nur der Trend $\delta Q$ sondern auch der aktuelle Volumenstrom Q. In der Berechnungseinheit 7' wird der zuvor in Abhängigkeit des Trends $\delta Q$ berechnete Mitkopplungswert $M=f(\delta Q)$ mit einer volumenstromabhängigen Skalierungsfunktion $S(Q) = S_{max}/(1+Q/Q_0)$ multipliziert. Fig. 3d zeigt einen entsprechenden Verlauf der Skalierungsfunktion für $S_{max}=2$ und $Q_0 = 1$ m$^3$/h.

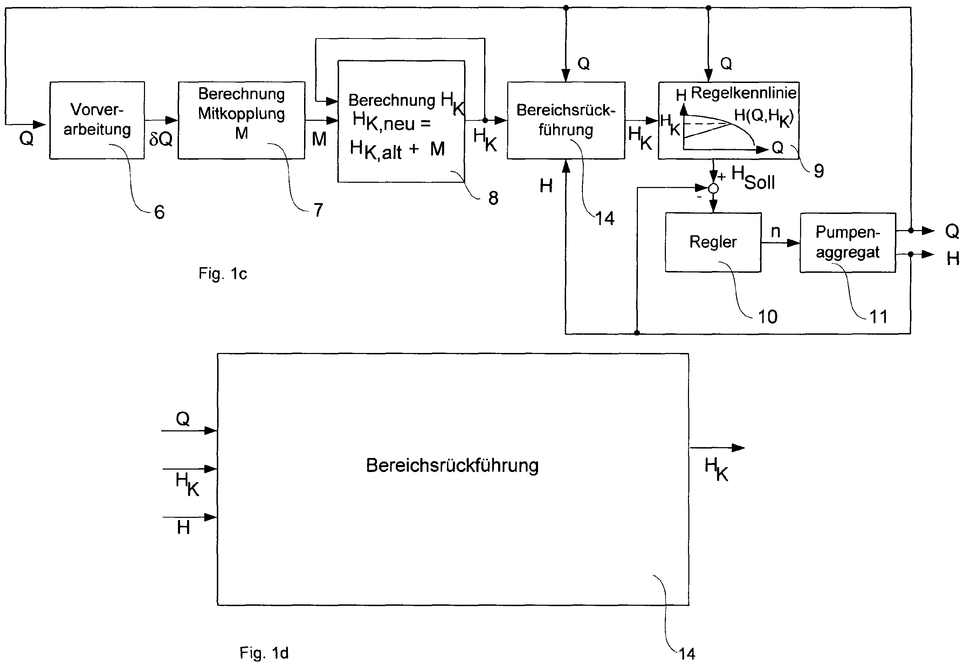

Darüber hinaus ist in Fig. 1b bei der Kennlinienregelung 9' eine $\Delta p$-c Kennlinie eingestellt, die über den gesamten Volumenstrombereich die Förderhöhe $H_{soll}$ des Pumpenaggregates 11 konstant hält. In diesem Fall entspricht der der Kennlinienregelung 9' vorgegebene Kennliniensollwert $H_K$ dem Förderhöhensollwert $H_{Soll}$, da der Kennliniensollwert $H_K$ ohne Änderung an den Ausgang der Kennlinienregelung 9' weitergegeben wird. Der Ausgang der Mitkopplungsstufe 8 könnte daher in dieser Ausführung auch direkt auf den Eingang des Reglers 10 gehen. Es sei darauf hingewiesen, dass die in Fig. 1b vorgenommenen beiden Änderungen nicht zwingend gleichzeitig in einer Ausführungsvariante vorhanden sein müssen. So kann sich auch eine Ausführungsvariante gegenüber derjenigen in Fig. 1 a nur darin unterscheiden, dass bei ihr die Mitkopplung aus dem Volumenstrom Q und dem Trend $\delta Q$ berechnet wird, wobei weiterhin eine unterlagerte $\Delta$p-v Kennlinienregelung nach Fig. 1a erfolgt. Alternativ kann in einer Ausführungsvariante die Mitkopplung wie in Figur 1 a nur anhand des Trends $\delta Q$ ermittelt werden, wobei eine unterlagerte $\Delta$p-c Kennlinienregelung wie in Figur 1b erfolgt.

Figur 1c zeigt eine weitere Ausführungsvariante des Regelungsschemas, das sich gegenüber der ersten und zweiten Variante in Figuren 1 a und 1 b dadurch unterscheidet, dass zwischen der Mitkopplungsstufe 8 und der Kennlinienregelung 9' eine Bereichsrückführungseinheit 14 vorhanden ist. Diese prüft, ob der aktuelle Betriebspunkt der Pumpe innerhalb eines Arbeitsbereichs 3 (siehe Fig. 4a bis c) liegt.

In Figur 1d ist die Funktion der Bereichsrückführungseinheit 14 angegeben:

Wenn (Q,H) oberhalb des Arbeitsbereiches 3 liegt, dann $H_K = H_{K,alt} - dH$;

Wenn (Q,H) unterhalb des Arbeitsbereiches 3 liegt, dann $H_K = H_{K,alt} + dH$;

Wenn (Q,H) innerhalb des Arbeitsbereiches 3 liegt, dann erfolgt keine Anpassung von $H_K$.

Liegt der aktuelle Betriebspunkt Q, H oberhalb des Arbeitsbereiches 3 erfolgt ein allmähliches, schrittweises Absenken des Kennliniensollwerts $H_K$ mit einer Schrittweite dH gemäß $H_K = H_{K,alt} - dH$. Liegt der aktuelle Betriebspunkt Q, H unterhalb des Arbeitsbereiches 3 erfolgt ein allmähliches, schrittweises Anheben des Kennliniensollwerts $H_K$ mit einer Schrittweite dH gemäß $H_K = H_{K,alt} + dH$. Wenn der aktuelle Betriebspunkt Q, H innerhalb des Arbeitsbereiches 3 liegt, erfolgt keine Anpassung von $H_K$.

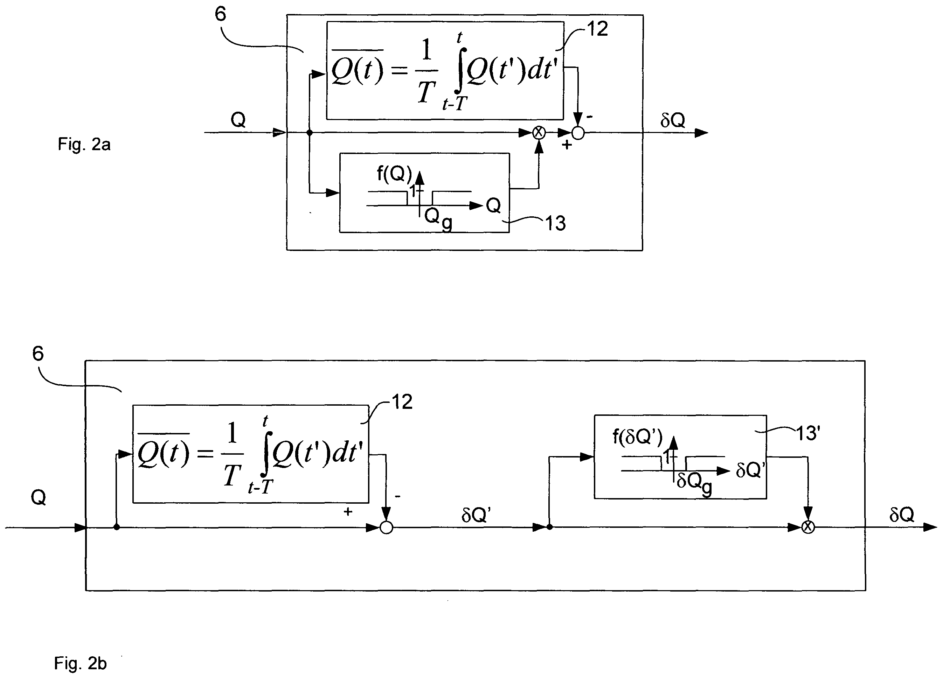

Figuren 2a und 2b zeigen eine Implementierung der Vorverarbeitung 6 gemäß der Figuren 1a, 1b und 1c. In einer ersten Ausführungsvariante gemäß Figur 2a umfasst die Vorbearbeitung 6 eine Filterung 13 des gemessenen Volumenstroms Q, eine gleitende Mittelwertbildung 12 und eine Berechnung der Volumenstromänderung, d.h. des Trends $\delta Q$. Die Filterung 13 erfolgt durch Multiplikation des gemessenen Volumenstroms Q mit einer Fensterfunktion f(Q), die für Werte unterhalb eines vorgegebenen Volumenstromminimalwerts Qg Null ist, und für Werte größer oder gleich diesem Volumenstromminimalwert Qg eins ist. Der Volumenstromminimalwert Qg liegt zwischen 10 und 80 l/h. Durch diese Multiplikation werden geringe Volumenstromwerte unterdrückt.

Teil der Vorverarbeitung 6 ist außerdem die gleitende Mittelwertbildung 12, die das arithmetische Mittel $\overline{Q}$ des gemessenen Volumenstroms Q über das vergangene Zeitintervall T berechnet. Der Trend $\delta Q$ berechnet sich aus der Differenz des gefilterten Volumenstroms Q und seines arithmetischen Mittelwerts $\overline{Q}$. Mathematisch kann der Trend $\delta Q$ als Ausgangsgröße der Vorverarbeitung 6 geschrieben werden als $\delta Q = Q(t) \cdot f(Q) - \overline{Q}(t)$. In dieser Ausführungsvariante gemäß Figur 2a erfolgen die Filterung 13 und die Mittelwertbildung 12 quasi parallel.

Figur 2b zeigt eine alternative Ausführungsvariante der Vorverarbeitung 6. Gemäß dieser Variante erfolgt keine Unterdrückung kleiner Volumenströme Q sondern eine Unterdrückung kleiner Volumenstromänderungen $\delta Q'$ durch den Filter 13'. In einem vorgelagerten Schritt 12 wird zunächst wieder der arithmetische Mittelwert $\overline{Q}$ des gemessenen Volumenstroms Q für das zurückliegende Zeitintervall T berechnet und dann der Trend $\delta Q'$ als Differenz des Volumenstroms Q und dieses Mittelwerts $\overline{Q}$ gebildet. Dieser Trend $\delta Q'$ wird dann gefiltert, indem er mit einer Fensterfunktion der aus Figur 2a bekannten Art multipliziert wird. Die Filterung sorgt dafür, dass kleine Trends $\delta Q' < \delta Q_g'$ zu Null gesetzt werden, d.h. nachfolgend unberücksichtigt bleiben. Der gefilterte Trend $\delta Q$ ist Ausgangsgröße der Vorverarbeitung 6 gemäß Figur 2b.

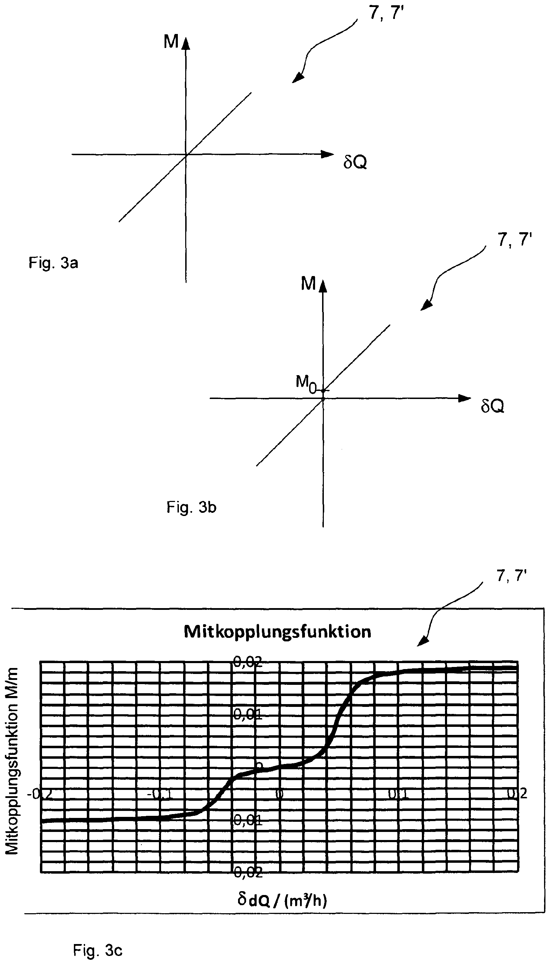

Figur 3a zeigt eine Mitkopplungsfunktion M($\delta Q$) in Gestalt einer Geraden, die einen linearen Zusammenhang zwischen dem Mittkopplungswert M und dem Trend $\delta Q$ beschreibt. Gemäß dieser linearen Abhängigkeit kann für jeden Trend $\delta Q$ ein entsprechender Mitkopplungswert M bestimmt werden. Diese Mitkopplungsfunktion M($\delta Q$) kann in der Berechnungseinheit 7, 7' der Figuren 1a und 1b implementiert sein.

Eine Alternative zur Bestimmung des Mitkopplungswerts M ist in Figur 3b gezeigt. Hier besitzt die Mitkopplung M gegenüber der Ausführungsvariante nach Figur 3a zusätzlich einen Offset $M_0$ für einen Volumenstromtrend von Null und für positive Volumenstromtrends $\delta Q$.

Eine weitere alternative Mitkopplungsfunktion, die in der Berechnungseinheit 7, 7' implementiert sein kann, ist in Figur 3c dargestellt. Gemäß dieser Ausführungsvariante wird der Mitkopplungswert M anhand einer asymmetrischen Mitkopplungsfunktion bestimmt. Die Mitkopplungsfunktion gemäß 3c hat den folgenden mathematisch-analytischen Ausdruck:

$$M(\delta Q) = M\_max \cdot (\arctan([\delta Q - c_1]/b_1)/\pi + d_1) + M\_min \cdot (\arctan([\delta Q + c_2]/b_2)/\pi - d_2) - E,$$

mit den Parametern

| | | | | |
|---|---|---|---|---|
| maximale positive Mitkopplung | M_max = | | 0,02 | m |
| maximale negative Mitkopplung | M_min = | | 0,01 | m |
| Trend | $\delta Q$ | Berechnet in Vorverarbeitung 6 | | $m^3/h$ |
| Skalierungsfaktor | $b_1 = b_2 =$ | | 0,01 | $m^3/h$ |
| Größe des Nullbereichs | $c_1 = c_2 =$ | | 0,05 | $m^3/h$ |
| Verschiebungsfaktor | $d_1 = d_2 =$ | | 0,5 | m |
| Nullpunktskorrektur | E | | 0,000628 | m |

Die asymmetrische Mitkopplungsfunktion $M(\delta Q)$ besteht demgemäß aus der Überlagerung zweier Arkustangens-Funktionen, die gegeneinander um denselben Verschiebungswert $c_1 = c_2$ verschoben sind. Die beiden Arkustangens-Funktionen sind demgemäß gegenüber ihrem natürlichen Symmetriepunkt im Nullpunkt des Koordinatensystems um den Wert c nach rechts (durch Subtraktion von $c_1$) bzw. nach links (durch Addition von $c_2$) verschoben. Zwischen diesen Verschiebungsfaktoren ist die Mitkopplungsfunktion $M(\delta Q)$ annähernd null.

Da die gewöhnliche Arkustangens-Funktion einen Wertebereich zwischen $+\pi/2$ und $-\pi/2$ besitzt, wird dieser Wertebereich durch eine Multiplikation mit $1/\pi$ auf den Wertebereich -0,5 bis +0,5 verändert. Zusätzlich wird zu der nach rechts verschobenen Arkustangens-Funktion der Wert $d_1 = 0,5$ hinzuaddiert, so dass der Wertebereich zwischen 0 und 1 liegt. In gleicher Weise wird von der nach links verschobenen Arkustangens-Funktion der Wert $d_2 = 0,5$ abgezogen, so dass deren Wertebereich zwischen -1 und 0 liegt.

Durch die Multiplikation der einzelnen Arkustangens-Funktionen mit einem Skalierungsfaktor M_max, M_min können vorbestimmte Grenzwerte für den Mitkopplungswert M festgelegt werden, an die sich die Arkustangens-Funktionen jeweils asymptotisch für betraglich steigende Trends $\delta Q$ annähern. Auf diese Weise erhält der Mitkopplungswert M einen maximalen Wert M_max der bei positiven Trends $\delta Q$ erreicht wird, sowie einen minimalen Wert M_min, der bei negativen Trends $\delta Q$ erreicht wird.

Werden diese Skalierungsfaktoren M_max, M_min unterschiedlich gewählt, ist die Mitkopplung für positive Trends $\delta Q$ anders festgelegt als für Negative. Aus diesem Grund wird die nach rechts verschobene Arkustangens-Funktion mit einem Skalierungsfaktor M_max multipliziert, der größer ist, als der Skalierungsfaktor M_min, mit dem die nach links verschobene Arkustangens-Funktion multipliziert wird. M_max ist hier größer gewählt, um für positive Trends eine höhere Mitkopplung zu erhalten, da auf einen gesteigerten Volumenstrombedarf schneller reagiert werden sollte, um Unterversorgung zu vermeiden.

Damit die Mitkopplungsfunktion durch den Nullpunkt verläuft, wird der Summe der beiden Arkustangens-Funktionen ein negativer Offset E hinzugefügt, der seiner Höhe nach der Summe der beiden Arkustangens-Funktionen für einen Trend $\delta Q = 0$ entspricht.

Die Berechnung des Mitkopplungswerts M kann numerisch anhand einer der Mitkopplungsfunktionen $M(\delta Q)$ in der Berechnungseinheit 7, 7' anhand des zuvor ermittelten Trends erfolgen. Alternativ kann die asymmetrische Funktion durch Stützstellen in einer so genannten Lookup-Table in der Berechnungseinheit 7, 7' hinterlegt sein, wobei im Falle von Zwischenwerten für den Trend $\delta Q$ zwischen diesen Stützstellen interpoliert wird.

Figur 4a zeigt ein H/Q-Diagramm 1 mit einer voreingestellten Referenzkennlinie K, deren Kennlinienreferenzsollwert $H_{K,ref}$ dort liegt, wo die Kennlinie K die Maximaldrehzahlkurve 2 schneidet. In diesem Schnittpunkt liegt der maximale Volumenstrom Q_max vor, der bei einer Regelung entlang dieser Referenzkennlinie K erreicht werden kann. Die Steilheit der Kennlinie ist dadurch bestimmt, dass ihr Schnittpunkt mit der Ordinate bei dem halben Kennlinienwert $0,5 \cdot H_{K,ref}$ liegt.

Um die Referenzkennlinie K herum ist ein bandförmiger Arbeitsbereich 3 gebildet, innerhalb dessen die Mitkopplung des Volumenstromtrends $\delta Q$ erfolgt. Der Pfeil 5 beschreibt hierbei eine Trajektorie, entlang derer sich der Betriebspunkt der geregelten Pumpe beispielhaft bewegen könnte, wenn das erfindungsgemäße Verfahren ausgeführt wird. Das Arbeitsband 3 wird durch eine obere Grenzkennlinie begrenzt, der ein maximaler Kennliniensollwert $H_{K,max}$ zugeordnet ist. Entsprechend ist das Arbeitsband 3 durch eine untere Grenzkennlinie begrenzt, der ein minimaler Kennliniensollwert $H_{K,min}$ zugeordnet ist. Im Rahmen der erfindungsgemäßen Regelung wird der Kennliniensollwert $H_K$ zwischen diesen Grenzsollwerten $H_{K,min}$, $H_{K,max}$ vorgegeben, und, ausgehend von der initialen Referenzkennlinie K, die zuletzt von der Regelung vorgegebene Kennlinie verschoben.

Des Weiteren ist in dem H/Q-Diagramm 1 in Figur 4a ein Auslegungspunkt 4 für die Heizungsanlage dargestellt, der zwar im Arbeitsbereich 3 liegt, jedoch nicht auf der voreingestellten Referenzkennlinie K, da diese Referenzkennlinie K an einem typischen Pumpenaggregat 11 manuell nur diskret einstellbar ist und der Auslegungspunkt 4 mit seinem Auslegungsvolumenstrom Q_A und seiner Auslegungsförderhöhe H_A daher in der Regel neben einer ausgewählten Kennlinie K liegt. Aus diesem Grund wird der optimale Betriebspunkt auf einer herkömmlichen, starr einstellbaren Kennlinie niemals erreicht.

Figur 4b zeigt ein H/Q-Diagramm 1 mit einem alternativen Arbeitsbereich 3 der nach oben hin durch die Referenzkennlinie K begrenzt ist, d.h. der ausschließlich unterhalb dieser Kennlinie K liegt und zudem in Richtung steigender Volumenströme Q durch einen Volumenstromreferenzwert Q_ref begrenzt ist. Die erfindungsgemäße Mitkopplung des Trends $\delta Q$ wird in diesem Ausführungsbeispiel nur vorgenommen, wenn der Betriebspunkt des Pumpenaggregates 11 unterhalb des Volumenstromreferenzwertes Q_ref und auf oder unterhalb der Referenzkennlinie K liegt, d.h. im Arbeitsbereich 3 liegt. Der Arbeitsbereich 3 ist zudem nach unten durch eine beispielhafte Gerade begrenzt, die bei einem Volumenstrom Null eine Förderhöhe von einem Sechstel $H_{K,ref}$ aufweist. Alternativ kann eine beliebige Funktion $H_{K,min}$ = f(Q) den Arbeitsbereich 3 nach unten begrenzen.

Die in den Figuren 4a und 4b dargestellten Arbeitsbereiche 3 sind durch einfache Funktionen in Form von Geraden begrenzt. Im Allgemeinen sind weitaus komplizierter zu beschreibende Grenzen des Arbeitsbereiches 3 möglich und sinnvoll. Aus numerischen Simulationen ist beispielsweise bekannt, welche Betriebspunkte einer Pumpe erforderlich sind, um den thermischen Bedarf eines Gebäudes zu decken. Ein sinnvoller Arbeitsbereich 3 für das erfindungsgemäße Verfahren ergibt sich in diesem Beispiel durch das zusammenhängende, umrahmte Gebiet in Figur 4d, in dem die überwiegende Anzahl der Betriebspunkte aus der numerischen Simulation enthalten ist. Diese Betriebspunkte genügen zur Abdeckung des Wärmebedarfs des simulierten Hauses. Der schraffierte Bereich innerhalb des umrahmten Gebiets 3 kennzeichnet Betriebspunkte bei Nacht. Außerhalb dieses schraffierten Bereichs aber innerhalb des umrahmten Gebiets 3, liegen Betriebspunkte bei Tag.

## Patentansprüche

1. Verfahren zum leistungsoptimierten Betreiben einer elektromotorisch angetriebenen Pumpe in einem hydraulischen System mit wenigstens einem selbstgeregelten Verbraucher, wobei die Sollförderhöhe ($H_{Soll}$) der Pumpe in Abhängigkeit ihres Volumenstroms (Q) entlang einer einstellbaren, unterlagerten Kennlinie geregelt wird, die mittels eines vorgebbaren Kennliniensollwerts ($H_K$) bestimmt ist, wobei der von der Pumpe geförderte Volumenstrom (Q) bestimmt und dessen Trend ($\delta Q$) ermittelt wird, wobei in Abhängigkeit des Volumenstroms (Q) und/ oder dessen Trends ($\delta Q$) der Kennliniensollwert ($H_K$) erhöht wird, wenn der Volumenstrom (Q) steigt, oder reduziert wird, wenn der Volumenstrom (Q) sinkt, **dadurch gekennzeichnet, dass** zu dem zuletzt vorgegebenen Kennliniensollwert ($H_{K,alt}$) ein Mitkopplungswert (M) addiert wird, der positiv ist, wenn der Volumenstrom (Q) steigt, und negativ ist, wenn der Volumenstrom (Q) sinkt.

2. Verfahren nach Anspruch 1, **dadurch gekennzeichnet, dass** der Trend ($\delta Q$) aus der Differenz des aktuellen Volumenstroms (Q) und seines arithmetischen Mittels ($\overline{Q}$) über ein gerade vergangenes Zeitintervall (T) berechnet wird.

3. Verfahren nach einem der vorherigen Ansprüche, **dadurch gekennzeichnet, dass** der bestimmte Volumenstrom (Q) mit Null multipliziert wird, wenn er betragsmäßig kleiner als ein vorgegebener Minimalwert ($Q_{min}$) ist, oder dass der ermittelte Trend ($\delta Q$) mit Null multipliziert wird, wenn er betragsmäßig kleiner als ein vorgegebener Minimalwert ($\delta Q_{min}$) ist.

4. Verfahren nach einem der vorherigen Ansprüche, **dadurch gekennzeichnet, dass** die Bestimmung des Mitkopplungswerts (M) aufgrund einer vom Volumenstrom (Q) und/ oder von dessen Trend ($\delta Q$) abhängigen Funktion (f(Q), f($\delta Q$), f(Q, $\delta Q$)) erfolgt.

5. Verfahren nach Anspruch 4, **dadurch gekennzeichnet, dass** der Mitkopplungswert (M) gemäß einer symmetrischen Funktion, insbesondere gemäß $M(\delta Q) = k \cdot \delta Q$, $M(\delta Q) = k \cdot (\delta Q)^3$ oder $M(\delta Q) = k \cdot \arctan(\delta Q)$ berechnet wird, wobei k eine positive Konstante, M der Mitkopplungswert und $\delta Q$ der Trend ist.

6. Verfahren nach Anspruch 4, **dadurch gekennzeichnet, dass** der Mitkopplungswert (M) gemäß einer asymmetrischen Funktion, insbesondere gemäß

$$M(\delta Q) = a_1 \cdot (\arctan([\delta Q - c_1]/b_1)/\pi + d_1) + a_2 \cdot (\arctan([\delta Q + c_2]/b_2)/\pi - d_2) - E$$

berechnet wird, wobei M der Mitkopplungswert, $\delta Q$ der Trend, $a_1$, $a_2$, $b_1$ und $b_2$ jeweils positive Skalierungsfaktoren, $c_1$, $c_2$, $d_1$ und $d_2$ jeweils positive Verschiebungsfaktoren und E ein Offset für eine Nullpunktskorrektur ist, und wobei $a_1$ ungleich $a_2$ ist.

7. Verfahren nach einem der vorherigen Ansprüche , **dadurch gekennzeichnet, dass** der Mitkopplungswert (M) betragsmäßig für positive Trends ($\delta Q$) größer ist als für negative Trends ($\delta Q$).

8. Verfahren nach einem der Ansprüche 4 bis 7, **dadurch gekennzeichnet, dass** dem Mitkopplungswert (M) ein Offset hinzuaddiert wird, wenn der Trend ($\delta Q$) positiv oder Null ist.

9. Verfahren nach einem der vorherigen Ansprüche, **dadurch gekennzeichnet, dass** dem Mitkopplungswert (M) ein Maximalwert (M_max) zugewiesen wird, wenn er einen oberen Grenzwert überschreitet, oder dass ihm ein Minimalwert (M_min) zugewiesen wird, wenn er einen unteren Grenzwert unterschreitet.

10. Verfahren nach Anspruch 6, 7 oder 8, **dadurch gekennzeichnet, dass** die asymmetrische Funktion (M($\delta Q$)) derart gewählt ist, dass sie für positive Trends ($\delta Q$) gegen einen Maximalwert (M_max) und für negative Trends ($\delta Q$) gegen einen Minimalwert (M_min) konvergiert.

11. Verfahren nach einem der vorherigen Ansprüche, **dadurch gekennzeichnet, dass** der Kennliniensollwert ($H_K$) auf einen Wert innerhalb eines Bereichs zwischen einem Maximalsollwert ($H_{K,max}$) und einem Minimalsollwert ($H_{K,min}$) beschränkt wird, wobei ein Referenzsollwert ($H_{K,ref}$) einer eingestellten oder einstellbaren Referenzkennlinie (K) innerhalb dieses Bereichs liegt oder dem Maximalsollwert ($H_{K,max}$) entspricht.

12. Verfahren nach einem der vorherigen Ansprüche, **dadurch gekennzeichnet, dass** die Erhöhung oder Reduzierung des
Kennliniensollwerts ($H_K$) nur dann vorgenommen wird, wenn der Volumenstrom (Q) unterhalb eines vorgegebenen Volumenstromreferenzwerts (Q_ref) liegt.

13. Verfahren nach Anspruch 12, **dadurch gekennzeichnet, dass** die
Sollförderhöhe ($H_{Soll}$) der Pumpe entlang einer voreingestellten Referenzkennlinie (K) geregelt wird, wenn der Volumenstrom (Q) oberhalb des Volumenstromreferenzwerts (Q_ref) liegt.

14. Verfahren nach einem der vorherigen Ansprüche 11 bis 13, **dadurch gekennzeichnet, dass** der Kennliniensollwert ($H_K$) allmählich, stufenweise reduziert wird, wenn er den Maximalsollwert ($H_{K,max}$) überschreitet, oder allmählich, stufenweise erhöht wird, wenn er den Minimalsollwert ($H_{K,min}$) unterschreitet.

15. Verfahren nach Anspruch 14, **dadurch gekennzeichnet, dass** die stufenweise Änderung Kennliniensollwert ($H_K$) so oft wiederholt wird, bis er wieder innerhalb des Bereichs zwischen dem Maximalsollwert ($H_{K,max}$) und dem Minimalsollwert ($H_{K,min}$) liegt.

16. Elektromotorisch angetriebene Pumpe mit einer Steuer- und Regelelektronik, die dazu eingerichtet ist, das Verfahren nach einem der Ansprüche 1 bis 15 auszuführen.

17. Computerprogrammprodukt mit Instruktionen zur Durchführung des Verfahrens zum Betreiben einer elektromotorisch betriebenen Pumpe nach einem der Ansprüche 1 bis 15, wenn es in einer Steuer- und Regelelektronik der Pumpe ausgeführt wird.

## Claims

1. Method for the performance-enhanced operation of a pump driven by an electric motor in a hydraulic system having at least one self-regulated load, the desired discharge head ($H_{sp}$) of the pump being regulated as a function of its volume flow (Q) along an adjustable subordinate characteristic curve, which is determined by means of a predefinable characteristic curve setpoint ($H_K$), the volume flow (Q) delivered by the pump and its trend ($\delta Q$) being determined, the characteristic curve setpoint ($H_K$) being increased when the volume flow (Q) increases or reduced when the volume flow (Q) decreases, depending on the volume flow (Q) and/or its trend ($\delta Q$), **characterized in that** the last predefined characteristic curve setpoint ($H_{K,old}$) has a feedback value (M) added, which is positive when the volume flow (Q) increases and is negative when the volume flow (Q) decreases.

2. Method according to Claim 1, **characterized in that** the trend ($\delta Q$) is calculated from the difference between the current volume flow (Q) and its arithmetic mean ($\overline{Q}$) over a time interval (T) that has just elapsed.

3. Method according to one of the preceding claims, **characterized in that** the volume flow (Q) determined is multiplied by zero when its magnitude is lower than a predefined minimum value ($Q_{min}$), or **in that** the trend ($\delta Q$) determined is multiplied by zero when its magnitude is lower than a predefined minimum value ($\delta Q_{min}$).

4. Method according to one of the preceding claims, **characterized in that** the determination of the feedback value (M) is carried out on the basis of a function (f(Q), f($\delta Q$), f(Q,$\delta Q$)) that depends on the volume flow (Q) and/or its trend ($\delta Q$).

5. Method according to Claim 4, **characterized in that** the feedback value (M) is calculated in accordance with a symmetrical function, in particular in accordance with $M(\delta Q)=k \cdot \delta Q$, $M(\delta Q)= k \cdot (\delta Q)^3$ or $M(\delta Q)= k \cdot \arctan(\delta Q)$, where k is a positive constant, M is the feedback value and $\delta Q$ is the trend.

6. Method according to Claim 4, **characterized in that** the feedback value (M) is calculated in accordance with an asymmetrical function, in particular in accordance with

$$M(\delta Q) \;=\; a_1 \cdot (\arctan([\delta Q - c_1]/b_1)/\pi \;+\; d_1) \;+\; a_2 \cdot (\arctan([\delta Q - c_2]/b_2)/\pi \;+\; d_2) \;-\; E$$

where M is the feedback value, $\delta Q$ is the trend, $a_1$, $a_2$, $b_1$, and $b_2$ are each positive shifting factors, $C_1$, $C_2$, $d_1$ and $d_2$ are each positive displacement factors, and E is an offset for a zero point correction, and where $a_1$ is not equal to $a_2$.

7. Method according to one of the preceding claims, **characterized in that** the feedback value (M) has a higher magnitude for positive trends ($\delta Q$) than for negative trends ($\delta Q$).

8. Method according to one of Claims 4 to 7, **characterized in that** an offset is added to the feedback value (M) when the trend ($\delta Q$) is positive or zero.

9. Method according to one of the preceding claims, **characterized in that** the feedback value (M) is assigned a maximum value (M_max) when it exceeds an upper limiting value, or **in that** it is assigned a minimum value (M_min) when it falls below a lower limiting value.

10. Method according to Claim 6, 7 or 8, **characterized in that** the asymmetric function (M($\delta Q$)) is chosen such that for positive trends ($\delta Q$) it converges towards a maximum value (M_max) and for negative trends ($\delta Q$) it converges towards a minimum value (M_min).

11. Method according to one of the preceding claims, **characterized in that** the characteristic curve setpoint ($H_K$) is restricted to a value within a range between a maximum setpoint ($H_{K,max}$) and a minimum setpoint ($H_{K,min}$) wherein a reference setpoint ($H_{K,ref}$) of an adjusted or adjustable reference characteristic curve (K) is within this range or corresponds to the maximum setpoint ($H_{K,max}$).

12. Method according to one of the preceding claims, **characterized in that** the increase or reduction in the characteristic curve setpoint ($H_K$) is made only when the volume flow (Q) lies below a predefined volume flow reference value (Q_ref).

13. Method according to Claim 12, **characterized in that** the desired discharge head ($H_{SP}$) of the pump is regulated along a preset reference characteristic curve (K) when the volume flow (Q) is above the volume flow reference value (Q_ref).

14. Method according to one of the preceding Claims 11 to 13, **characterized in that** the characteristic curve setpoint ($H_K$) is reduced gradually, step by step, when it exceeds the maximum setpoint ($H_{K,max}$), or is increased gradually, step by step, when it falls below the minimum setpoint ($H_{K,min}$).

15. Method according to Claim 14, **characterized in that** the stepwise change in the characteristic curve setpoint ($H_K$) is repeated until it is once more within the range between the maximum setpoint ($H_{K,max}$) and the minimum setpoint ($H_{K,min}$).

16. Pump driven by an electric motor having control and regulating electronics which are set up to carry out the method according to one of Claims 1 to 15.

**17.** Computer program product having instructions for carrying out the method for operating a pump driven by an electric motor according to one of Claims 1 to 15 when it is executed in control and regulating electronics of the pump.

**Revendications**

**1.** Procédé de fonctionnement à puissance optimisée d'une pompe à entraînement électromotorisé dans un système hydraulique comprenant au moins un consommateur autorégulant, la hauteur de refoulement de consigne ($H_{Soll}$) de la pompe étant régulée en fonction de son débit volumique (Q) le long d'une courbe caractéristique superposée réglable, laquelle est définie au moyen d'une valeur de consigne de courbe caractéristique ($H_K$) qui peut être prédéfinie, le débit volumique (Q) refoulé par la pompe étant défini et sa tendance ($\delta Q$) étant déterminée, la valeur de consigne de courbe caractéristique ($H_K$) étant augmentée en fonction du débit volumique (Q) et/ou de sa tendance ($\delta Q$) lorsque le débit volumique (Q) augmente ou réduite lorsque le débit volumique (Q) baisse,
**caractérisé en ce que**
une valeur de rétroaction (M) est additionnée à la dernière valeur de consigne de courbe caractéristique prédéfinie ($H_{K, alt}$), laquelle est positive lorsque le débit volumique (Q) augmente et négative lorsque le débit volumique (Q) baisse.

**2.** Procédé selon la revendication 1, **caractérisé en ce que** la tendance ($\delta Q$) est calculée à partir de la différence entre le débit volumique (Q) actuel et sa moyenne arithmétique ($\overline{Q}$) sur un intervalle de temps (T) qui vient de s'écouler.

**3.** Procédé selon l'une des revendications précédentes, **caractérisé en ce que** le débit volumique (Q) défini est multiplié par zéro lorsque sa valeur absolue est inférieure à une valeur minimale ($Q_{min}$) prédéfinie, ou **en ce que** la tendance ($\delta Q$) déterminée est multipliée par zéro lorsque sa valeur absolue est inférieure à une valeur minimale ($\delta Q_{min}$) prédéfinie.

**4.** Procédé selon l'une des revendications précédentes, **caractérisé en ce que** la définition de la valeur de rétroaction (M) est effectuée en se basant sur une fonction (f(Q), f($\delta Q$), f(Q, $\delta Q$)) dépendante du débit volumique (Q) et/ou de sa tendance ($\delta Q$).

**5.** Procédé selon la revendication 4, **caractérisé en ce que** la valeur de rétroaction (M) est calculée conformément à une fonction symétrique, notamment conformément à M($\delta Q$) = k.$\delta Q$, M($\delta Q$) = k.($\delta Q$)$^3$ ou M($\delta Q$) = k.arctan($\delta Q$), k étant une constante positive, M la valeur de rétroaction et $\delta Q$ la tendance.

**6.** Procédé selon la revendication 4, **caractérisé en ce que** la valeur de rétroaction (M) est calculée conformément à une fonction asymétrique, notamment conformément à

```
M(δQ) = a₁.(arctan([δQ − c₁]/b₁)/π + d₁) + a₂.(arctan([δQ
+ c₂]/b₂)/π + d₂) − E,
```

M étant la valeur de rétroaction, $\delta Q$ la tendance, $a_1$, $a_2$, $b_1$ et $b_2$ étant respectivement des facteurs d'échelle positifs, $c_1$, $c_2$, $d_1$ et $d_2$ étant respectivement des facteurs de décalage positifs et E un décalage pour une correction du point zéro, et $a_1$ étant différent de $a_2$.

**7.** Procédé selon l'une des revendications précédentes, **caractérisé en ce que** la valeur absolue de la valeur de rétroaction (M) est plus grande pour les tendances ($\delta Q$) positives que pour les tendances ($\delta Q$) négatives.

**8.** Procédé selon l'une des revendications 4 à 7, **caractérisé en ce qu'**un décalage est ajouté à la valeur absolue de la valeur de rétroaction (M) lorsque la tendance ($\delta Q$) est positive ou nulle.

**9.** Procédé selon l'une des revendications précédentes, **caractérisé en ce qu'**une valeur maximale (M_max) est associée à la valeur de rétroaction (M) lorsqu'elle devient supérieure à une valeur limite haute, ou **en ce qu'**une valeur minimale (M_min) lui est associée lorsqu'elle devient inférieure à une valeur limite basse.

**10.** Procédé selon la revendication 6, 7 ou 8, **caractérisé en ce que** la fonction asymétrique (M($\delta Q$)) est choisie de

telle sorte qu'elle converge vers une valeur maximale (M_max) pour les tendances ($\delta$Q) positives et vers une valeur minimale (M_min) pour les tendances ($\delta$Q) négatives.

11. Procédé selon l'une des revendications précédentes, **caractérisé en ce que** la valeur de consigne de courbe caractéristique ($H_K$) est limitée à une valeur comprise à l'intérieur d'une plage entre une valeur de consigne maximale ($H_{K,max}$) et une valeur de consigne minimale ($H_{K,min}$), une valeur de consigne de référence ($B_{K,ref}$) d'une courbe caractéristique de référence (K) réglée ou réglable se trouvant à l'intérieur de cette plage ou correspondant à la valeur de consigne maximale ($H_{K,max}$).

12. Procédé selon l'une des revendications précédentes, **caractérisé en ce que** l'augmentation ou la réduction de la valeur de consigne de courbe caractéristique ($H_K$) n'est effectuée que lorsque le débit volumique (Q) est inférieur à une valeur de référence de débit volumique (Q_ref) prédéfinie.

13. Procédé selon la revendication 12, **caractérisé en ce que** la hauteur de refoulement de consigne ($H_{Soll}$) de la pompe est régulée le long d'une courbe caractéristique de référence (K) préréglée lorsque le débit volumique (Q) est supérieur à la valeur de référence de débit volumique (Q_ref) prédéfinie.

14. Procédé selon l'une des revendications 11 à 13, **caractérisé en ce que** la valeur de consigne de courbe caractéristique ($H_K$) est réduite graduellement par paliers lorsqu'elle devient supérieure à la valeur de consigne maximale ($H_{K,max}$) ou est augmentée graduellement par paliers lorsqu'elle devient inférieure à la valeur de consigne minimale ($H_{K,min}$).

15. Procédé selon la revendication 14, **caractérisé en ce que** la modification par palier de la valeur de consigne de courbe caractéristique ($H_K$) est répétée autant de fois que nécessaire jusqu'à ce qu'elle se trouve de nouveau à l'intérieur de la plage entre la valeur de consigne maximale ($H_{K,max}$) et la valeur de consigne minimale ($H_{K,min}$).

16. Pompe à entraînement électromotorisé pourvue d'une électronique de commande et de régulation qui est conçue pour mettre en oeuvre le procédé selon l'une des revendications 1 à 15.

17. Produit de programme informatique comprenant des instructions pour mettre en oeuvre le procédé de fonctionnement d'une pompe à entraînement électromotorisé selon l'une des revendications 1 à 15 lorsqu'il est exécuté sur une électronique de commande et de régulation de la pompe.

Fig. 1a

Fig. 1b

Q    H

Pumpenaggregat — 11

H Regelkennlinie — 9
H(Q,H$_K$)    Q
Q
H $_{Soll}$
H$_K$
+
−
Regler — 10
n

Bereichsrückführung — 14
Q
H$_K$
H

Berechnung H$_K$
H$_{K,neu}$ =
H$_{K,alt}$ + M — 8
H$_K$

Berechnung
Mitkopplung
M — 7
M

Vorverarbeitung — 6
δQ
Q

Fig. 1c

Bereichsrückführung — 14
H$_K$
Q
H$_K$
H

Fig. 1d

Fig. 2a

Fig. 2b

7, 7'

M

δQ

Fig. 3a

7, 7'

M

$M_0$

δQ

Fig. 3b

7, 7'

**Mitkopplungsfunktion**

Mitkopplungsfunktion M/m

0,02

0,01

0

-0,2    -0,1    0    0,1    0,2

0,01

0,02

δdQ / (m³/h)

Fig. 3c

Fig. 4a

Fig. 4b

Fig. 3d

Fig. 4c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3225141 A1